# EUROPÄISCHE PATENTANMELDUNG

(11) **EP 3 604 851 A1**
(43) Veröffentlichungstag der Anmeldung: **05.02.2020**
(21) Anmeldenummer: 18186471.1
(22) Anmeldetag: 31.07.2018
(51) Int. Cl.: F16F 13/14, F16F 1/387

(54) **BUCHSE**

(71) Anmelder: ContiTech Vibration Control Slovakia s.r.o., 972 23 Dolne Vestenice (SK)
(72) Erfinder: Krsjak, Andrej, 02001 Puchov (SK); Janega, Juraj, 95637 Zlatniky (SK); Belisko, Jozef, 08005 Presov (SK); Hopko, Anton, 97226 Nitrianske Rudno (SK)
(74) Vertreter: Preusser, Andrea

(57) **Zusammenfassung**

Die vorliegende Erfindung betrifft eine Buchse (2), aufweisend ein zylindrisches Gehäuse (4), das einen Arbeitsraum (6) bildet, ein in dem Arbeitsraum (6) angeordnetes Gummilager (8), ein erstes Befestigungselement (10), ein zweites Befestigungselement (12), und ein Zentralelement (14), wobei das Gummilager (8) vier Lagerbeine (16) aufweist, die X-förmig in einer Umfangsrichtung (U) des zylindrischen Gehäuses (4) verteilt angeordnet sind, sodass sich jedes Lagerbein (16) vom dem zylindrischen Gehäuse (4) radial nach innen erstreckt, wobei zwei in Umfangsrichtung (U) benachbarte Lagerbeine (18) der vier Lagerbeine (16) als erste Lagerbeine (18) und die anderen zwei Lagerbeine (20) als zweite Lagerbeine (20) bestimmt sind, wobei die radial innenseitigen Enden der ersten Lagerbeine (18) mit dem ersten Befestigungselement (10) verbunden sind, wobei die radial innenseitigen Enden der zweiten Lagerbeine (20) mit dem zweiten Befestigungselement (12) verbunden sind, wobei das erste und zweite Befestigungselement (10, 12) durch die Lagerbeine (16) derart angeordnet sind, dass die Befestigungselemente (10, 12) einen von dem Arbeitsraum (6) gebildeten Aufnahmeraum (26) in Umfangsrichtung (U) zumindest teilweise umgeben, und wobei das Zentralelement (14) größere Abmessungen als der Aufnahmeraum (26) aufweist und derart in den Aufnahmeraum (26) eingesteckt ist, sodass das Zentralelement (14) das erste Befestigungselement (10) radial gegen die ersten Lagerbeine (18) und das zweite Befestigungselement (12) radial gegen die zweiten Lagerbeine (20) drückt.

## Beschreibung

Aus dem Stand der Technik sind Buchsen bekannt. Eine Buchse kann auch als Lagerbuchse bezeichnet sein. Buchsen werden verwendet, um zwei Elemente oder Bauteile lagernd miteinander zu verbinden. Beispielsweise ist eine Buchse mit einem zylindrischen Gehäuse, das einen Arbeitsraum bildet, bekannt. In den Arbeitsraum ist ein Zentralelement eingebracht, das über zwei beinförmige Gummielemente mit der radialen Innenseite des Gehäuses verbunden ist. Um eine derartige Buchse herzustellen, wird zunächst die Verbindung zwischen den zylindrischen Gehäuse und dem Zentralelement über noch nicht vollständig vulkanisiertes Gummimaterial hergestellt, wobei die Buchse daraufhin einer höheren Temperatur, beispielsweise 160 Grad, ausgesetzt wird, was zur Vulkanisation des Gummimaterials führt. Dabei schrumpft das Gummimaterial und auf das Gummimaterial wirkende innere Zugspannungen entstehen. Dennoch ist das Zentralelement über das vulkanisierte Gummi mit dem zylindrischen Gehäuse verbunden, sodass eine Buchse gebildet ist. Das zylindrische Gehäuse kann zur mechanischen Ankopplung an ein erstes Element und das Zentralelement zur mechanischen Ankopplung an ein zweites Element ausgebildet sein, sodass mittels der Buchse eine lagernde Verbindung zwischen dem ersten und zweiten externen Element gewährleistet werden kann. Die zuvor genannten, aus Gummimaterial bestehenden Beine sind V-förmig zueinander angeordnet. Aufgrund der Vulkanisation und der zuvor genannten V-förmigen Anordnung der Gummibeine weist die Buchse eine nichtlineare Steifigkeitskennlinie auf. Wird das Zentralelement beispielsweise derart relativ zu dem zylindrischen Gehäuse bewegt, das Druckkräfte auf die Gummibeine wirken, so führt dies zu einer entsprechenden Verformung der Gummibeine und einer entsprechenden Relativverschiebung zwischen dem Zentralelement und dem Gehäuse. Wird das Zentralelement jedoch betragsmäßig mit der gleichen Kraft in die entgegengesetzte Richtung beaufschlagt, führt dies nicht zu einer entsprechend betragsmäßig gleichen relativen Wegänderung zwischen dem Zentralelement und dem Gehäuse. Denn in diesem Fall kann die innere Spannung im Gummimaterial einer Relativverschiebung entgegenwirken. Eine Kennlinie, die die Kraft über den relativen Weg zwischen dem Zentralelement und dem zylindrischen Gehäuse abbildet, ist deshalb nicht gerade, sondern bogenförmig. Dies wird auch als eine nichtlineare Kraft-Weg-Kennlinie bezeichnet.

Der Erfindung liegt die Aufgabe zugrunde, eine Buchse bereitzustellen, die eine möglichst lineare Kraft-Weg-Kennlinie und eine möglichst hohe Langlebigkeit bietet.

Gelöst wird die Aufgabe durch eine Buchse mit den Merkmalen des Anspruchs 1. Vorgesehen ist also eine Buchse, die ein zylindrisches Gehäuse, das einen Aufnahmeraum bildet, ein in dem Aufnahmeraum angeordnetes Gummilager, ein erstes Befestigungselement, ein zweites Befestigungselement und ein Zentralelement aufweist. Das in dem Arbeitsraum angeordnete Gummilager weist vier Lagerbeine auf, die X-förmig in einer Umfangsrichtung des zylindrischen Gehäuses verteilt angeordnet sind, sodass sich jedes Lagerbein von dem zylindrischen Gehäuse radial nach innen erstreckt. Zwei in Umfangsrichtung benachbarte Lagerbeine der vier Lagerbeine sind als erste Lagerbeine bestimmt. Die anderen zwei Lagerbeine des Gummilagers sind als zweite Lagerbeine bestimmt. Die radial innenseitigen Enden der ersten Lagerbeine sind mit dem ersten Befestigungselement verbunden. Die radial innenseitigen Enden der zweiten Lagerbeine sind mit dem zweiten Befestigungselement verbunden. Das erste und zweite Befestigungselement sind durch die Lagerbeine derart angeordnet, dass das erste und zweite Befestigungselement einen von dem Arbeitsraum gebildeten Aufnahmeraum in Umfangsrichtung zumindest teilweise umgeben. Der Aufnahmeraum kann also ein Teil des Arbeitsraums sein. Das Zentralelement weist größere Abmessungen als der Arbeitsraum auf. Außerdem ist das Zentralelement derart in dem Aufnahmeraum eingesteckt, sodass das Zentralelement das erste Befestigungselement radial gegen die ersten Lagerbeine und das zweite Befestigungselement radial gegen die zweiten Lagerbeine drückt.

Die X-förmig in Umfangsrichtung verteilt angeordneten, mittels des Zentralelements auf Druck belastete Lagerbeine des Gummilagers erlauben eine lineare Kraft-Weg-Kennlinie. Denn ein bei der Vulkanisierung des Gummimaterials des Gummilagers und somit auch das bezüglich der Lagerbeine auftretende Schrumpfen wirkt auf jedes der vier Lagerbeine. Die entsprechend auftretende, innere Zugspannung wird durch den vom Zentralelement beaufschlagten Druck kompensiert. Darüber hinaus sind die Lagerbeine X-förmig in Umfangsrichtung verteilt angeordnet. Dadurch kann gewährleistet werden, dass eine beliebige in Radialrichtung zwischen dem Zentralelement und dem Gehäuse wirkende Kraft zu einer zumindest im Wesentlichen gleichen relativen Verschiebung zwischen dem Zentralelement und dem zylindrischen Gehäuse führt. Dadurch kann eine besonders lineare bzw. gerade Kraft-Weg-Kennlinie gewährleistet werden.

Bei Untersuchungen wurde darüber hinaus festgestellt, dass die durch eine Vulkanisation auftretende Schrumpfung der Lagerbeine zu einer geringeren Haltbarkeit führen kann, was bei bekannten Buchsen oftmals auf die inneren Spannungen im Gummimaterial zurückführbar ist. Die in einem Lagerbein aufgrund der Schrumpfung wirkende, innere Spannung kann herabgesetzt werden, wenn das Lagerbein in Radialrichtung zusammen gedrückt wird. Entsprechendes kann für jedes der Lagerbeine gelten. Es ist deshalb für die erfindungsgemäße Buchse vorgesehen, dass die ersten Lagerbeine mit dem ersten Befestigungselement und die zweiten Lagerbeine mit dem zweiten Befestigungselement vorzugsweise stoffschlüssig verbunden sind. Die beiden Befestigungselemente sind vorzugsweise voneinander getrennt ausgebildet. Über das erste Befestigungselement können Kräfte in Radialrichtung auf die ersten Lagerbeine ausgeübt werden. Über das zweite Befestigungselement können Kräfte in Radialrichtung auf die zweiten Lagerbeine ausgeübt werden. Das erste und zweite Befestigungselement sind über die ersten bzw. zweiten Lagerbeine so angeordnet, dass die beiden Befestigungselemente in dem Arbeitsraum einen Aufnahmeraum für das Zentralelement bilden. Dabei ist der Aufnahmeraum nicht notwendigerweise vollständig von den beiden Befestigungselementen umschlossen. Vielmehr kann es vorgesehen sein, dass die beiden Befestigungselemente den Aufnahmeraum in Umfangsrichtung nur teilweise umgeben. Dies kann jedoch für den gewünschten Zweck von Vorteil sein. Denn das Zentralelement weist größere Abmessungen als der Aufnahmeraum auf. So ist beispielsweise der mittlere äußere Durchmesser des Zentralelements größer als der mittlere Durchmesser des Aufnahmeraums. Es ist auch möglich, dass die mantelseitigen äußeren Abmessungen des Zentralelements größer als die entsprechenden Abmessungen des Aufnahmeraums sind. Mit anderen Worten ist das Zentralelement in Durchmesserrichtung größer als der entsprechende Durchmesser des Aufnahmeraums. Das Zentralelement ist jedoch in dem Aufnahmeraum eingesteckt. Aufgrund der zuvor genannten Verhältnisse der Abmessungen führt dies zu einem Kraftschluss zwischen dem Zentralelement und den beiden Befestigungselementen. Denn aufgrund der zuvor erläuterten Abmessungen drückt das Zentralelement jedes der beiden Befestigungselemente radial nach außen, sodass das erste Befestigungselement radial gegen die ersten Lagerbeine und das zweite Befestigungselement radial gegen die zweiten Lagerbeine drückt. Durch die damit auf die Lagerbeine wirkenden Kräfte werden die von der Vulkanisation verursachten inneren Spannungen herabgesetzt oder sogar kompensiert. Aufgrund dieser zumindest herabgesetzten, inneren Spannung weist das Gummilager und damit auch die Buchse eine besonders hohe Langlebigkeit auf.

Eine vorteilhafte Ausgestaltung der Buchse zeichnet sich dadurch aus, dass die Buchse eine hydraulische Buchse ist. Die Buchse kann deshalb auch als eine sogenannte Hydrobuchse oder als eine Hydrolagerbuchse bezeichnet sein und/oder ausgebildet sein. Dabei kann die Buchse zur hydraulischen Dämpfung einer Relativbewegung zwischen dem zylindrischen Gehäuse und dem Zentralelement ausgebildet sein. Wie bereits Eingangs erläutert, ist das zylindrische Gehäuse und das Zentralelement jeweils zur Befestigung an einem externen Bauteil oder Element ausgebildet. Die Buchse bzw. die hydraulische Buchse kann deshalb zur Lagerung des einen Bauteils an dem anderen, oder umgekehrt, ausgebildet sein. Die hydraulische Dämpfungseigenschaft bietet eine besonders sanfte Dämpfung einer Relativbewegung zwischen dem Zentralelement und dem zylindrischen Gehäuse bzw. zwischen dem einen Bauteil und dem anderen Bauteil.

Eine weitere vorteilhafte Ausgestaltung der Buchse zeichnet sich dadurch aus, dass das zylindrische Gehäuse und das Gummilager eine erste Fluidkammer, eine zweite Fluidkammer und einen Fluidkanal zumindest teilweise bilden und/oder zumindest teilweise formen, wobei die erste Fluidkammer nur über dem Fluidkanal zum Fluidaustausch mit der zweiten Fluidkammer, insbesondere hydraulisch, gekoppelt ist. Die erste Fluidkammer und die zweite Fluidkammer können zumindest teilweise mit einem Fluid gefüllt sein. Hierbei handelt es sich vorzugsweise um eine Flüssigkeit. In der Praxis wird beispielsweise Öl verwendet, das in die erste und/oder zweite Fluidkammer eingebracht ist. Indem das Gummilager die beiden Fluidkammern zumindest teilweise mit formt oder bildet, findet bei einer Verwendung der Buchse eine Veränderung der Größe der Fluidkammern statt, was zu einem Austausch von Fluid über den Fluidkanal zwischen den beiden Fluidkammern führt. Durch den effektiven Durchmesser des Fluidkanals und/oder durch einen Strömungswiderstand des Fluidkanals kann beeinflusst werden, wie die Fluidkammern und der Fluidkanal zur Dämpfung einer Relativbewegung zwischen dem Zentralelement und dem zylindrischen Gehäuse der Buchse beitragen.

Eine weitere vorteilhafte Ausgestaltung der Buchse zeichnet sich dadurch aus, dass die Lagerbeine Wände der Fluidkammern bilden. So können die erste Fluidkammer beispielsweise zwischen den ersten Lagerbeinen und die zweite Fluidkammer zwischen den zweiten Lagerbeinen angeordnet sein. Eine Relativbewegung zwischen dem Zentralelement und dem zylindrischen Gehäuse kann dazu führen, dass die ersten Lagerbeine gestaucht werden, was zu einer Verkleinerung der ersten Fluidkammer führt. Gleichzeitig können die zweiten Lagerbeine gestreckt werden, was zu einer Vergrößerung der zweiten Fluidkammer führt. Die erste und zweite Fluidkammer sind über den Fluidkanal gekoppelt, sodass Flüssigkeit aus der ersten Fluidkammer durch den Fluidkanal in die zweite Fluidkammer strömt. Der strömenden Flüssigkeit wird dabei der Strömungswiderstand des Fluidkanals entgegengesetzt, was zu einer entsprechenden Dämpfung der Relativbewegung zwischen dem Zentralelement und dem zylindrischen Gehäuse führt.

Eine weitere vorteilhafte Ausgestaltung der Buchse zeichnet sich dadurch aus, dass die Lagerbeine symmetrisch angeordnet und/oder ausgebildet sind. So können die Lagerbeine beispielsweise punktsymmetrisch zu einem Zentrum und/oder einer Drehachse des zylindrischen Gehäuses ausgebildet sein. Es ist auch möglich, dass die ersten Lagerbeine spiegelsymmetrisch zu den zweiten Lagerbeinen angeordnet und/oder ausgebildet sind. Mit beiden genannten Möglichkeiten zur symmetrischen Ausgestaltung der Lagerbeine kann gewährleistet werden, dass eine effektive Steifigkeit des Gummilagers in einer Radialrichtung des zylindrischen Gehäuses linear ist. Damit wird insbesondere eine gerade oder lineare Kraft-Weg-Kennlinie bei einer Relativverschiebung des Zentralelements in Radialrichtung zu dem zylindrischen Gehäuse gewährleistet.

Eine vorteilhafte Ausgestaltung der Buchse zeichnet sich dadurch aus, dass das zylindrische Gehäuse und das Zentralelement jeweils zur mechanischen Ankopplung an ein externes Element und/oder ein externes Bauteil ausgebildet sind. So kann das zylindrische Gehäuse beispielsweise an ein externes, erstes Bauteil angekoppelt werden und das Zentralelement an ein externes, zweites Bauteil angekoppelt werden. Das zylindrische Gehäuse kann mantelaußenseitig Befestigungsabschnitte zur Ankopplung aufweisen. Das Zentralelement kann beispielsweise eine mittige Bohrung zur Ankopplung aufweisen. Das zylindrische Gehäuse und das Zentralelement können jeweils also auch ein Anschlusselement bilden, das zum Anschluss und/oder Befestigung an einem jeweils entsprechenden, externen Bauteil ausgebildet ist. Über das zylindrische Gehäuse und das Zentralelement können jeweils Kräfte auf die Buchse übertragen werden. Die Buchse kann deshalb als Lager bezeichnet und/oder ausgebildet sein.

Eine weitere vorteilhafte Ausgestaltung der Buchse zeichnet sich dadurch aus, dass die Abmessungen des Zentralelements, insbesondere die mantelaußenseitigen Abmessungen des Zentralelements derart vorbestimmt sind, dass zumindest ein vorbestimmter mechanischer Druck auf jedes der Befestigungselemente, insbesondere in Radialrichtung, ausgeübt wird, sodass eine Kraft auf jedes Lagerbein in einer entsprechend radialen Richtung wirkt. Durch die Vorbestimmung der Abmessungen kann der daraus resultierende, vorbestimmte mechanische Druck bzw. die auf die Lagerbeine wirkende Kraft ebenfalls vorbestimmt sein. Dies ist von Vorteil, denn zur Herabsetzung der mit der Vulkanisation entstehenden inneren Spannung sind oftmals nur beschränkt große Kräfte notwendig. Die Abmessungen des Zentralelements können deshalb beispielsweise derart vorbestimmt sein, dass in den Lagerbeinen eine möglichst kleine resultierende Spannung in einem unbenutzten Zustand der Buchse besteht.

Eine vorteilhafte Ausgestaltung der Buchse zeichnet sich dadurch aus, dass die Abmessungen des Zentralelements, insbesondere die mantelaußenseitigen Abmessungen des Zentralelements, derart vorbestimmt sind, dass eine innere mechanische Spannung des Gummilagers kleiner als eine vorbestimmte Schwellwertspannung ist. Bereits zuvor wurde erläutert, dass die mit der Vulkanisierung entstehende innere Spannung in den Lagerbeinen durch die über die Befestigungselemente von dem Zentralelement ausgeübten Kräfte herabgesetzt werden kann. Um durch diese wirkenden Kräfte jedoch nicht den gegenteiligen Effekt zu erreichen, nämlich dass auf die Lagerbeine im Stillstand bzw. Auslieferungszustand unnötig hohe Druckspannungen und/oder -kräfte wirken, ist es vorgesehen, dass die Abmessungen des Zentralelements, insbesondere die mantelaußenseitigen Abmessungen des Zentralelements, derart vorbestimmt sind, dass die innere mechanische Spannung in jedem Lagerbein kleiner als die vorbestimmte Schwellwertspannung ist. Die Schwellwertspannung kann einen Wert für die obere Grenze eines Betrages der inneren mechanischen Spannung eines jeden Lagerbeins sein. Dadurch kann auch gewährleistet werden, dass eine durch Überlagerung einer durch Vulkanisation hervorgerufenen inneren Zugspannung in einem Lagerbein und der zuvor erläuterten Druckspannung resultierende Spannung betragsmäßig kleiner als die vorbestimmte Schwellwertspannung ist. Dies gewährleistet, dass das Gummilager und damit auch die Buchse eine besonders hohe Langlebigkeit hat.

Eine weitere vorteilhafte Ausgestaltung der Buchse zeichnet sich dadurch aus, dass das Zentralelement mit jedem der Befestigungselemente durch einen Formschluss und einen Kraftschluss verbunden ist. Der Kraftschluss zwischen dem Zentralelement und jedem der beiden Befestigungselemente entsteht beispielsweise dann, wenn das Zentralelement in den Aufnahmeraum eingesteckt wird. Das Zentralelement kann an der zugehörigen Mantelseite zumindest abschnittsweise jeweils eine Form aufweisen, die zu der jeweiligen Form des ersten bzw. zweiten Befestigungselements korrespondiert. Alternativ oder ergänzend kann es vorgesehen sein, dass jede der Befestigungselemente in dem Aufnahmeraum regnende Befestigungsabschnitte aufweist, die in Vertiefungen an der Mantelaußenseite des Zentralelements greifen. Hierdurch kann eine formschlüssige Verbindung zwischen dem Zentralelement und jedem der Befestigungselemente gewährleistet werden.

Eine weitere vorteilhafte Ausgestaltung der Buchse zeichnet sich dadurch aus, dass jedes der ersten und zweiten Befestigungselemente als trapezförmige Platte ausgebildet ist. Jedes der Befestigungselemente kann in Umfangsrichtung in drei Abschnitte, insbesondere Plattenabschnitte, gegliedert sein, wobei die jeweils in Umfangsrichtung äußeren Abschnitte mit den Lagerbeinen verbunden sind, wobei der weitere Abschnitt als Koppelabschnitt zwischen den anderen beiden Abschnitten wirkt. Die trapezförmige Ausgestaltung der Befestigungselemente bietet den Vorteil, dass Kräfte besonders einfach in Radialrichtung auf die Lagerbeine übertragen werden können. Darüber hinaus ist anzumerken, dass die Befestigungselemente den Aufnahmeraum in Umfangsrichtung zumindest teilweise umgeben. Durch die trapezförmige Ausgestaltung der Befestigungselemente kann deshalb ein im Querschnitt achteckiger Aufnahmeraum entstehen, insbesondere dann, wenn die beiden Befestigungselemente voneinander beabstandet angeordnet sind.

Eine vorteilhafte Ausgestaltung der Buchse zeichnet sich dadurch aus, dass der Aufnahmeraum einen zumindest im Wesentlichen achteckigen Querschnitt aufweist. In diesem Zusammenhang wird auf die vorangegangen Erläuterungen zumindest in analogerweise verwiesen. Der Aufnahmeraum kann dabei teilweise von den Befestigungselementen mantelseitig umgeben und/oder begrenzt sein. Dies ist auch von Vorteil, denn das Zentralelement wird in den Aufnahmeraum eingesteckt, wobei die Abmessungen des Zentralelements größer als die Abmessungen des Aufnahmeraums sind. Indem die Befestigungselemente voneinander getrennt und an den jeweils zugehörigen Lagerbeinen befestigt sind, können die Befestigungselemente beim Einstecken des Zentralelements in gegenüberliegende Radialrichtungen ausweichen, was zu der Stauchung der Lagerbeine und der Beaufschlagung der Lagerbeine mit den gewünschten Druckkräften und/oder Druckspannungen zur Herabsetzung der inneren Spannung der Lagerbeine führt. Als besonders vorteilhaft hat es sich herausgestellt, wenn die Grundquerschnittsform des Zentralelements ebenfalls achteckförmig ausgestaltet ist. Dies ist jedoch nicht zwingend notwendig. Vielmehr kann das Zentralelement an gegenüberliegenden Abschnitten der Mantelfläche ebenfalls trapezförmig ausgestaltete und/oder angeordnete Flächen aufweisen, die vorzugsweise mit dem trapezförmigen Befestigungselementen kraft- und/oder formschlüssig zusammenwirken bzw. verbunden sein können.

Eine weitere vorteilhafte Ausgestaltung der Buchse zeichnet sich dadurch aus, dass ein Stützrahmen in das Gummilager eingebettet ist. Der Stützrahmen kann dabei ringförmig und/oder in Umfangsrichtung umlaufend ausgebildet sein. Der Stützrahmen kann in ein Gummimaterial des Gummilagers eingebettet sein und mit der Vulkanisation des Gummilagers eine feste Verbindung mit dem Gummilager eingehen. Der Stützrahmen kann deshalb zum Stützen des Gummilagers dienen. Der Stützrahmen ist vorzugsweise nur in Abschnitten des Gummilagers ausgebildet, die nicht von den Lagerbeinen gebildet sind. Mit anderen Worten ist bevorzugt vorgesehen, dass sich der Stützrahmen nicht in die Lagerbeine erstreckt. Vorzugsweise ist der Stützrahmen aus einem Metall oder einem faserverstärkten Kunststoff. So kann der Stützrahmen beispielsweise aus Stahl sein. Es ist aber auch möglich, dass der Stützrahmen beispielsweise aus einem kohlefaserverstärkten Kunststoff gebildet ist.

Eine vorteilhafte Ausgestaltung der Buchse zeichnet sich dadurch aus, dass das zylindrische Gehäuse aus Metall oder Kunstsoff ist. So kann das zylindrische Gehäuse beispielsweise aus Stahl oder aus Aluminium sein. Es ist aber auch möglich, dass das zylindrische Gehäuse aus einem faserverstärkten Kunststoff, insbesondere einem kohlefaserverstärkten Kunststoff, gebildet ist.

Eine weitere vorteilhafte Ausgestaltung der Buchse zeichnet sich dadurch aus, dass das erste Befestigungselement und das zweite Befestigungselement jeweils aus Metall oder Kunststoff sind. So kann jedes der Befestigungselemente beispielsweise aus Stahl oder einem anderen Metall, wie beispielsweise Aluminium, sein. Es ist aber auch möglich, dass jedes der Befestigungselemente aus einem Kunststoff, insbesondere einem faserverstärkten Kunststoff, wie beispielsweise aus einem kohlenfaserverstärkten Kunststoff, gebildet ist.

Eine weitere vorteilhafte Ausgestaltung der Buchse zeichnet sich dadurch aus, dass das Zentralelement aus Metall oder einem Verbundwertstoff ist. So kann das Zentralelement beispielsweise aus Stahl oder einem anderen Metall, wie beispielsweise Aluminium, gebildet sein. Es ist aber auch möglich, dass das Zentralelement durch einen Verbundwertstoff gebildet ist. So kann das Zentralelement beispielsweise aus einem faserverstärktem Kunststoff, insbesondere einem kohlefaserverstärktem Kunststoff, gebildet sein.

Weitere Merkmale, Vorteile und Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbezügen. In den Figuren stehen weiterhin gleiche Bezugszeichen für gleiche oder ähnliche Objekte.
- Figur 1: zeigt eine vorteilhafte Ausgestaltung einer Buchse in einer schematischen Querschnittsansicht.
- Figur 2: zeigt eine vorteilhafte Ausgestaltung eines Stützrahmens in einer schematischen Perspektivansicht.
- Figur 3: zeigt eine vorteilhafte Ausgestaltung des Gummilagers in einer schematischen Perspektivansicht.
- Figur 4: zeigt eine vorteilhafte Ausgestaltung des ersten und zweiten Befestigungselements in einer schematischen Perspektivansicht.
- Figur 5: zeigt eine vorteilhafte Ausgestaltung des Gehäuses in einer schematischen Perspektivansicht.
- Figur 6: zeigt eine vorteilhafte Ausgestaltung der Buchse ohne das Zentralelement in einer schematischen Perspektivansicht.
- Figur 7: zeigt eine vorteilhafte Ausgestaltung des Zentralelements in einer schematischen Perspektivansicht.
- Figur 8: zeigt eine vorteilhafte Ausgestaltung der Buchse in einer schematischen Perspektivansicht.

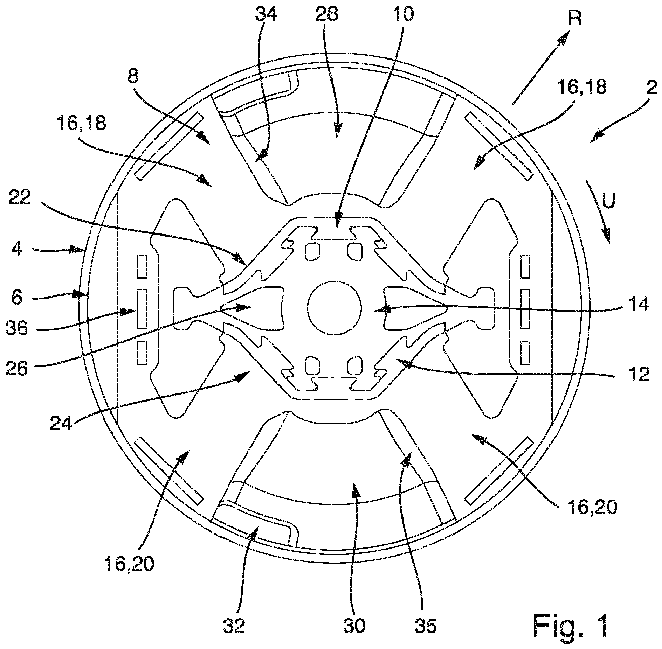

In der Figur 1 ist eine vorteilhafte Ausgestaltung der Buchse 2 in einer schematischen Perspektivansicht dargestellt. Die Buchse 2 weist ein zylindrisches Gehäuse 4 auf. Vorzugsweise ist das Gehäuse 4 mantelseitig geschlossen ausgebildet. Von dem Gehäuse 4 ist ein innenliegender Arbeitsraum 6 gebildet. In diesem Arbeitsraum 6 ist ein Gummilager 8 angeordnet. Das Gummilager 8 weist vorzugsweise eine stoffschlüssige Verbindung zu der innenseitigen Mantelfläche des Gehäuses 4 auf. Mit anderen Worten kann das Gummilager mit der Mantelwandung des Gehäuses 4 stoffschlüssig verbunden sein. Außerdem weist die Buchse 2 ein erstes Befestigungselement 10 und ein zweites Befestigungselement 12 sowie ein Zentralelement 14 auf.

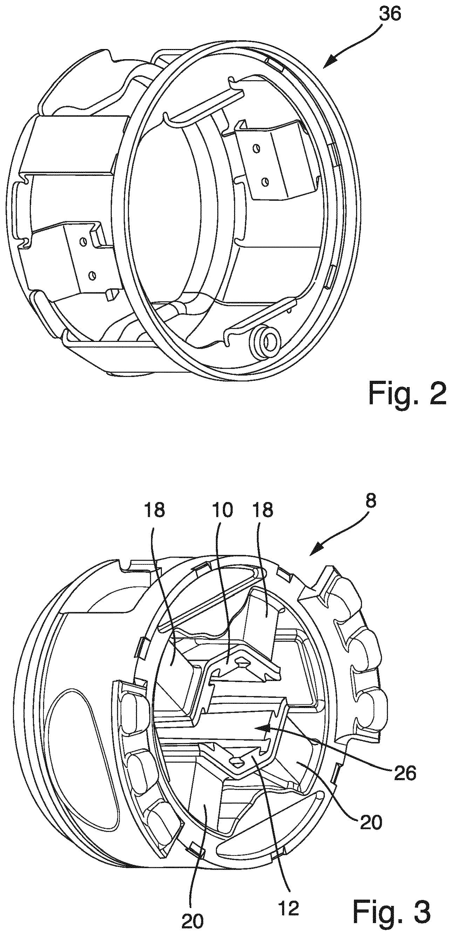

Das Gummilager 6 weist vier Lagerbeine 16 auf, die X-förmig in einer Umfangsrichtung U des zylindrischen Gehäuses 4 verteilt angeordnet sind, sodass sich jedes Lagerbein 16 von dem zylindrischen Gehäuse 4 radial nach innen, also in einer Radialrichtung R nach innen erstrecken. Von dem Gummilager 6 können auch weitere Abschnitte des Gummilagers 6 gebildet sein. So kann das Gummilager 6 beispielsweise einen ringförmigen Abschnitt aufweisen, von dem sich die Lagerbeine 16 in Radialrichtung R nach innen erstrecken. Das Gummilager 8 ist zumindest im Wesentlichen von Gummimaterial, und zwar vorzugsweise von einem vulkanisierten Gummimaterial, gebildet. Zumindest aber basiert das Gummilager 6 auf Gummimaterial. In das Gummilager 6 kann nämlich ein Stützrahmen 36 eingebettet sein. Der Stützrahmen 36 ist rein beispielhaft und schematisch in der Figur 2 dargestellt. Der Stützrahmen 36 kann ebenfalls ringförmig und/oder in Umfangsrichtung U umlaufend ausgebildet sein. Der Stützrahmen 36 kann dem ringförmigen Abschnitt des Gummilagers 6 deshalb eine erhöhte Steifigkeit und/oder Festigkeit aufprägen.

Zwei der in Umfangsrichtung U benachbarten Lagerbeine 18 der vier Lagerbeine 16 werden als erste Lagerbeine 18 bezeichnet. Die anderen zwei Lagerbeine 20 der Lagerbeine 16 werden als zweite Lagerbeine 20 bezeichnet. Die Lagerbeine 16 können symmetrisch zueinander angeordnet sein. So können beispielsweise die ersten Lagerbeine 18 symmetrisch, insbesondere spiegelsymmetrisch, zu den zweiten Lagerbeinen 20 angeordnet und/oder ausgebildet sein. Die radial innenseitigen Enden 22 der ersten Lagerbeine 18 können mittels Gummimaterial des Gummilagers 6 miteinander verbunden sein. Zwischen den ersten Lagerbeinen 18 kann deshalb eine erste Fluidkammer 28 der Buchse 2 angeordnet und/oder gebildet sein. Hierauf soll jedoch erst in einem späteren Absatz Bezug genommen werden.

Die zweiten Lagerbeine 20 können ebenfalls durch Gummimaterial des Gummilagers 6 an ihren radial innenseitigen Enden 24 miteinander verbunden sein. Zwischen den zweiten Lagerbeinen 20 kann eine zweite Fluidkammer 30 angeordnet und/oder gebildet sein.

Darüber hinaus ist es vorgesehen, dass die radial innenseitigen Enden 22 der ersten Lagerbeine 18 mit dem ersten Befestigungselement 10 verbunden sind. Dies kann beispielsweise eine stoffschlüssige Verbindung sein. Das erste Befestigungselement 10 ist vorzugsweise nicht aus Gummimaterial gebildet. Vielmehr ist es bevorzugt vorgesehen, dass das Befestigungselement 10 aus Metall oder einem anderen Kunststoff, insbesondere einem faserverstärktem Kunststoff, gebildet ist. Die radial innenseitigen Enden 24 der zweiten Lagerbeine 20 sind mit dem zweiten Befestigungselement 12 verbunden. Dies kann eine stoffschlüssige Verbindung sein. Das zweite Befestigungselement 12 ist vorzugsweise nicht aus Gummimaterial gebildet. Vielmehr ist es bevorzugt vorgesehen, dass das zweite Befestigungselement 12 aus Metall oder einem anderen Kunststoff, beispielsweise einem faserverstärktem Kunststoff, gebildet ist. Weiterhin ist es bevorzugt vorgesehen, dass jedes der beiden Befestigungselemente 10, 12 trapezförmig, also vorzugsweise im Querschnitt trapezförmig, ausgebildet ist. Die umfangsseitigen Endabschnitt eines jeden Befestigungselements 10, 12 können in diesem Fall nämlich mit den jeweils entsprechenden Lagerbeinen 18 bzw. 20 derart verbunden sein, sodass das erste Befestigungselement 10 eine in Radialrichtung R wirkende Kraft auf die ersten Lagerbeine 18 und das zweite Befestigungselement 12 eine in Radialrichtung R auf die zweiten Lagerbeine 20 wirkenden Kraft ausüben können.

Das erste und zweite Befestigungselement 10, 12 sind durch die ersten Lagerbeine 18 bzw. die zweiten Lagerbeine 20 derart angeordnet, dass die Befestigungselement 10, 12 ein von dem Arbeitsraum 6 gebildeten Aufnahmebereich 26 in Umfangsrichtung U zumindest teilweise umgeben. So kann das erste Befestigungselement 10 von den ersten Lagerbeinen 18 derart angeordnet sein, dass das erste Befestigungselement 10 einen entsprechenden ersten mantelseitigen Abschnitt des Aufnahmeraums 26 begrenzt. Das zweite Befestigungselement 12 kann von den zweiten Lagerbeinen 20 derart angeordnet sein, dass das zweite Befestigungselement 12 gegenüberliegend zu dem ersten Befestigungselement 10 angeordnet ist und einen entsprechend gegenüberliegenden Abschnitt des Aufnahmeraums 26 begrenzt. Dieser Abschnitt kann ein zweiter mantelseitiger Abschnitt des Aufnahmeraums sein. Das erste und zweite Befestigungselement 10, 12 sind vorzugsweise getrennt voneinander ausgebildet.

Außerdem ist es vorgesehen, dass die Abmessung des Zentralelements 14 größer ist als die Abmessung des Aufnahmeraums 26. Dies gilt insbesondere in Bezug auf die jeweilige Abmessung in Radialrichtung R. Außerdem ist das Zentralelement 14 derart in den Aufnahmeraum 26 eingesteckt, sodass das erste Befestigungselement 10 radial gegen die ersten Lagerbeine 18 und das zweite Befestigungselement 12 radial gegen die zweiten Lagerbeine 20 gedrückt sind. In diesem Zusammenhang soll auch eine weitere vorteilhafte Ausgestaltung einer Buchse 2 mit Bezug auf die Figuren 2 bis 8 verwiesen werden. Diese Figuren zeigen eine weitere vorteilhafte Ausgestaltung der Buchse 2, jedoch gelten die im Folgenden erörterten Erläuterungen in analoger Weise für eine Buchse 2, wie sie beispielhaft in der Figur 2 dargestellt ist, und umgekehrt.

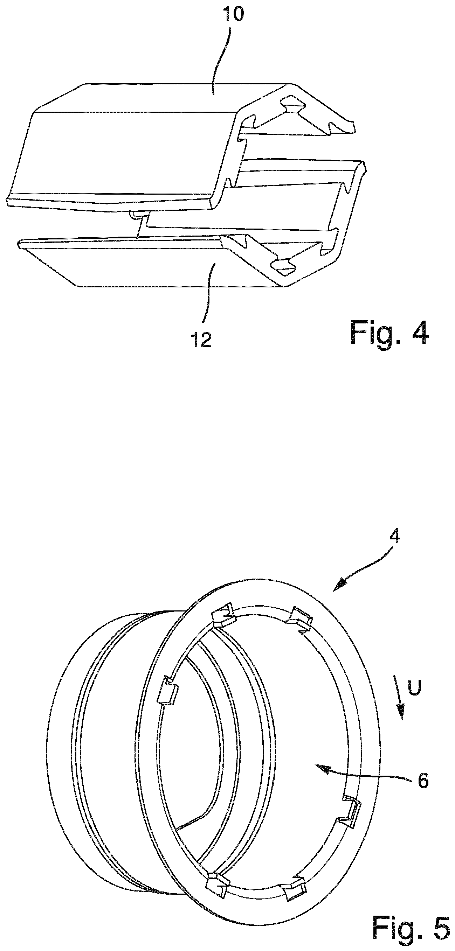

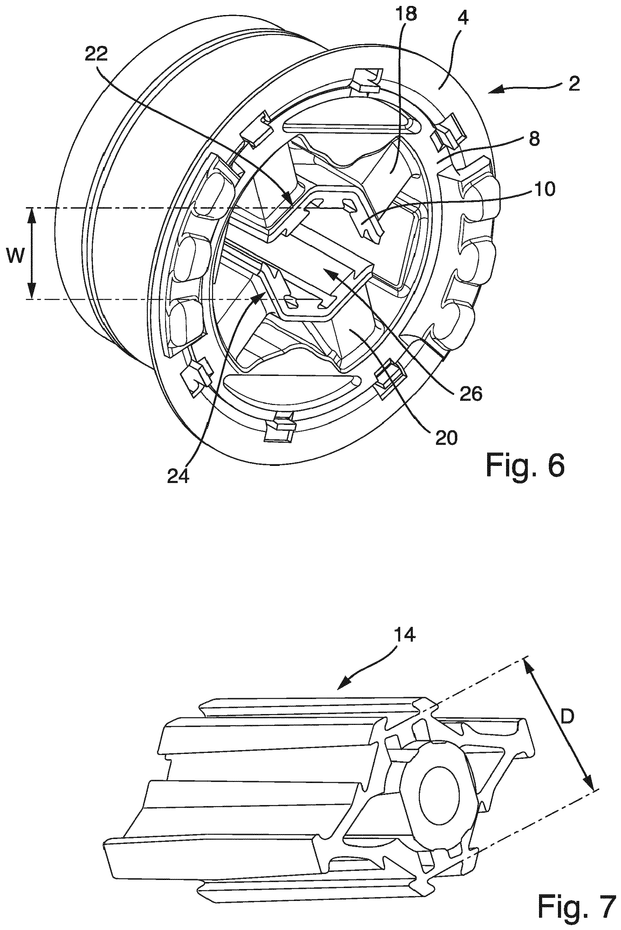

Die Figur 3 zeigt das Gummilager 8 in einer schematischen Perspektivansicht, wobei die in Figur 4 rein beispielhaft dargestellten Befestigungselemente 10, 12 bereits mit den jeweils zugehörigen Lagerbeinen 18 bzw. 20 verbunden sind. Durch die Befestigung des ersten Befestigungselements 10 an den ersten Lagerbeinen 18 und durch die Befestigung des zweiten Befestigungselements 12 an den zweiten Lagerbeinen 20 entsteht zwischen den beiden Befestigungselementen 10, 12 der gewünschte Aufnahmeraum 26. Die beiden Befestigungselemente 10, 12 sind kontaktfrei zueinander angeordnet. Das Gummilager 8 mit den daran befestigten Befestigungselemente 10, 12 kann in dem Arbeitsraum 6 (siehe Figur 5) eingesetzt werden, sodass ein Zwischenprodukt entsteht, wie es beispielhaft in der Figur 6 dargestellt ist. Durch die voneinander beabstandete Anordnung der beiden Befestigungselemente 10, 12 kann für den Aufnahmeraum 26 eine Öffnungsweite W bestimmt sein, die beispielsweise von einem Abstand zwischen radial gegenüberliegenden Flächen der beiden Befestigungselemente 10, 12 bestimmt ist.

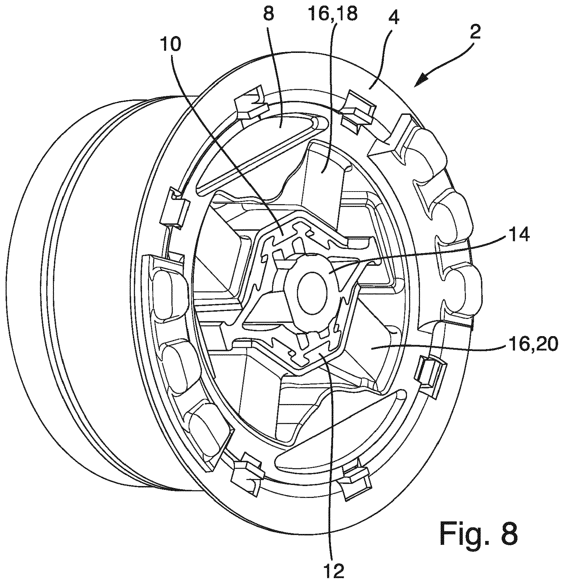

In der Figur 7 ist eine beispielhafte Ausgestaltung des Zentralelementes 14 dargestellt. Diese ist vorzugsweise aus Metall oder faserverstärktem Kunststoff. Außerdem kann das Zentralelement 14 beispielsweise einen äußeren Durchmesser D aufweisen. Die Abmessung des Zentralelements 14 kann beispielsweise durch den genannten Durchmesser D bestimmt und/oder repräsentiert sein. Die Abmessung des Aufnahmeraums 26 kann durch die zuvor genannte Öffnungsweise W bestimmt und/oder repräsentiert sein. Außerdem ist es vorgesehen, dass die Abmessung bzw. der Durchmesser D des Zentralelements 14 größer ist als die Abmessung bzw. die Öffnungsweise W des Aufnahmeraums 26. Wird das Zentralelement 14 in den Aufnahmeraum 26 eingesteckt, führt dies zu einer elastischen Verformung der ersten und zweiten Lagerbeine 18, 20 in Radialrichtung R, was schematisch in der Figur 8 dargestellt ist. Auf die Lagerbeine 16, 18, 20 wirkt also durch das Einstecken des Zentralelements 14 eine in Radialrichtung R wirkenden Kraft. Diese Kraft verursacht eine Druckspannung, die kompensierend zu einer zuvor durch die Vulkanisation auf die Lagerbeine 16, 18, 20 wirkende Zugspannung wirkt. Daraus resultiert, dass die Lagerbeine 16, 18, 20 einer insgesamt geringeren Spannung ausgesetzt sind, was die Langlebigkeit und die Linearität der Kennlinie des Gummilagers 8 und damit der Buchse 2 verbessert.

Durch die größere Abmessung bzw. den größeren Durchmesser D des Zentralelements 14 als die Abmessungs- bzw. die Öffnungsweite W des Aufnahmeraums 26 besteht zwischen dem Zentralelement 14 und jedem der beiden Verbindungselemente 10, 12 eine kraftschlüssige Verbindung. Es ist deshalb bevorzugt vorgesehen, dass das Zentralelement 14 aus Metall ist. Außerdem können das Zentralelement 14 sowie jedes der beiden Verbindungselemente 10, 12 Verbindungsabschnitte aufweise, die für eine formschlüssige Verbindung zwischen dem Zentralelement 14 und jeden der Verbindungselemente 10, 12 geformt und/oder ausgebildet sind. Mit dem Einstecken des Zentralelements 14 in den Aufnahmeraum 26 kann deshalb auch eine formschlüssige Verbindung zwischen dem Zentralelement 14 und jedem der beiden Verbindungselemente 10, 12 entstehen.

Vorzugsweise ist die Buchse 2 als eine Hydrolagerbuchse 2 ausgebildet. Hierzu können die bereits erwähnten Fluidkammern 28, 30 dienen. Diese sind zumindest teilweise, nämlich über die Wände 34, 35 der Lagerbeine 18, 20 des Gummilagers begrenzt. Eine Verformung der Lagerbeine 18, 20 führt deshalb zu einer Volumenveränderung der Fluidkammern 28, 30. Die erste Fluidkammer 28 ist über einen von dem Gummilager 8 gebildeten Fluidkanal 32 mit der zweiten Fluidkammer 30 gekoppelt. Eine andere Fluidverbindung zwischen der ersten Fluidkammer 28 und der zweiten Fluidkammer 30 besteht vorzugsweise nicht. Jede der beiden Fluidkammern 28, 30 kann zumindest teilweise mit einem Fluid, insbesondere einer Flüssigkeit, wie Öl, gefüllt sein. Das Gehäuse 4 und das Zentralelement 14 dienen jeweils zur Ankopplung an ein weiteres Bauteil, sodass die beiden Bauteile über die Buchse 2 gelagert miteinander verbunden werden können.

Ergänzend sei darauf hingewiesen, dass "aufweisend" keine anderen Elemente oder Schritte ausschließt und "ein" oder "eine" keine Vielzahl ausschließt. Ferner sei darauf hingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkung anzusehen.

### Bezugszeichenliste (Teil der Beschreibung)

- U: Umfangsrichtung
- R: Radialrichtung
- D: Durchmesser
- W: Öffnungsweite

- 2: Buchse
- 4: Gehäuse
- 6: Arbeitsraum
- 8: Gummilager
- 10: erste Befestigungselement
- 12: zweites Befestigungselement
- 14: Zentralelement
- 16: Lagerbein
- 18: erstes Lagerbein
- 20: zweites Lagerbein
- 22: Ende von erstem Lagerbein
- 24: Ende von zweitem Lagerbein
- 26: Aufnahmeraum
- 28: erste Fluidkammer
- 30: zweite Fluidkammer
- 32: Fluidkanal
- 34: Wand
- 35: Wand
- 36: Stützrahmen

## Patentansprüche

1. Buchse (2), aufweisend:
ein zylindrisches Gehäuse (4), das einen Arbeitsraum (6) bildet,
ein in dem Arbeitsraum (6) angeordnetes Gummilager (8),
ein erstes Befestigungselement (10),
ein zweites Befestigungselement (12), und
ein Zentralelement (14),
wobei das Gummilager (8) vier Lagerbeine (16) aufweist, die X-förmig in einer Umfangsrichtung (U) des zylindrischen Gehäuses (4) verteilt angeordnet sind, sodass sich jedes Lagerbein (16) vom dem zylindrischen Gehäuse (4) radial nach innen erstreckt,
wobei zwei in Umfangsrichtung (U) benachbarte Lagerbeine (18) der vier Lagerbeine (16) als erste Lagerbeine (18) und die anderen zwei Lagerbeine (20) als zweite Lagerbeine (20) bestimmt sind,
wobei die radial innenseitigen Enden (22) der ersten Lagerbeine (18) mit dem ersten Befestigungselement (10) verbunden sind,
wobei die radial innenseitigen Enden (24) der zweiten Lagerbeine (20) mit dem zweiten Befestigungselement (12) verbunden sind,
wobei das erste und zweite Befestigungselement (10, 12) durch die Lagerbeine (18, 20) derart angeordnet sind, dass die Befestigungselemente (10, 12) einen von dem Arbeitsraum (6) gebildeten Aufnahmeraum (26) in Umfangsrichtung (U) zumindest teilweise umgeben, und
wobei das Zentralelement (14) größere Abmessungen als der Aufnahmeraum (26) aufweist und derart in den Aufnahmeraum (26) eingesteckt ist, sodass das Zentralelement (14) das erste Befestigungselement (10) radial gegen die ersten Lagerbeine (18) und das zweite Befestigungselement (12) radial gegen die zweiten Lagerbeine (20) drückt.

2. Buchse (2) gemäß dem vorherigen Anspruch, **dadurch gekennzeichnet, dass** die Buchse (2) eine hydraulische Buchse (2) ist.

3. Buchse (2) gemäß dem vorherigen Anspruch, **dadurch gekennzeichnet, dass** das zylindrische Gehäuse (4) und das Gummilager (8) eine erste Fluidkammer (28), eine zweite Fluidkammer (30) und einen Fluidkanal (32) bilden und/oder formen, wobei die erste Fluidkammer (28) nur über den Fluidkanal (32) zum Fluidaustausch mit der zweiten Fluidkammer (30), insbesondere hydraulisch, gekoppelt ist.

4. Buchse (2) gemäß dem vorherigen Anspruch, **dadurch gekennzeichnet, dass** die Lagerbeine (16) Wände (34, 35) der Fluidkammern (28, 30) bilden.

5. Buchse (2) gemäß einem der vorherigen Ansprüche, **dadurch gekennzeichnet, dass** die Lagerbeine (16) symmetrisch angeordnet und/oder ausgebildet sind.

6. Buchse (2) gemäß einem der vorherigen Ansprüche, **dadurch gekennzeichnet, dass** das zylindrische Gehäuse (4) und das Zentralelement (14) jeweils zur mechanischen Ankopplung an ein externes Element und/oder ein externes Bauteil ausgebildet sind.

7. Buchse (2) gemäß einem der vorherigen Ansprüche, **dadurch gekennzeichnet, dass** die Abmessungen des Zentralelements (14) derart vorbestimmt sind, dass zumindest ein vorbestimmter mechanischer Druck auf jedes der Befestigungselemente (10, 12) ausgeübt wird, so dass eine Kraft auf jedes Lagerbein (16) in einer entsprechend radialen Richtung R wirkt.

8. Buchse (2) gemäß dem vorherigen Anspruch, **dadurch gekennzeichnet, dass** die Abmessungen des Zentralelements (14) derart vorbestimmt sind, dass eine innere mechanische Spannung jedes Lagerbeins (16) kleiner als eine vorbestimmte Schwellenwertspannung ist.

9. Buchse (2) gemäß einem der vorherigen Ansprüche, **dadurch gekennzeichnet, dass** das Zentralelement (14) mit jedem der Befestigungselemente (10,12) durch einen Formschluss und einen Kraftschluss verbunden ist.

10. Buchse (2) gemäß einem der vorherigen Ansprüche, **dadurch gekennzeichnet, dass** jedes der ersten und zweiten Befestigungselemente (10, 12) als trapezförmige Platte ausgebildet ist.

11. Buchse (2) gemäß einem der vorherigen Ansprüche, **dadurch gekennzeichnet, dass** der Aufnahmeraum (26) einen zumindest im Wesentlichen achteckigen Querschnitt umfasst.

12. Buchse (2) gemäß einem der vorherigen Ansprüche, **dadurch gekennzeichnet, dass** ein Stützrahmen (36) in das Gummilager (8) eingebettet ist.

13. Buchse (2) gemäß einem der vorherigen Ansprüche, **dadurch gekennzeichnet, dass** das zylindrische Gehäuse (4) aus Metall oder Kunststoff ist.

14. Buchse (2) gemäß einem der vorherigen Ansprüche, **dadurch gekennzeichnet, dass** jedes der ersten und zweiten Befestigungselemente (10, 12) aus Metall oder Kunststoff ist.

15. Buchse (2) gemäß einem der vorherigen Ansprüche, **dadurch gekennzeichnet, dass** das Zentralelement (14) aus Metall oder Verbundwerkstoff ist.
